# EUROPEAN PATENT APPLICATION

(11) **EP 4 772 990 A1**
(43) Date of publication of application: **08.07.2026**
(21) Application number: 23959885.7
(22) Date of filing: 30.11.2023
(51) Int. Cl.: G06F 3/06, G06F 13/00, G06F 12/00

(54) **MULTI-THREADED STORAGE METHOD AND UNIT, CHIP AND ELECTRONIC DEVICE**

(71) Applicant: VeriSilicon Microelectronics (Shanghai) Co., Ltd., Shanghai 201203 (CN)
(72) Inventor: HUANG, Lijie, Shanghai 201203 (CN); WU, Jianbing, Shanghai 201203 (CN); ZHANG, Qin, Shanghai 201203 (CN); JIANG, Fulong, Shanghai 201203 (CN); QIN, Kui, Shanghai 201203 (CN); ZHANG, Huiming, Shanghai 201203 (CN); LU, Rong, Shanghai 201203 (CN); MENG, Yue, Shanghai 201203 (CN); WANG, Chao, Shanghai 201203 (CN)
(74) Representative: Lapienis, Juozas
(86) International application number: PCT/CN2023/135629
(87) International publication number: WO 2025/111972

(57) **Abstract**

The present application relates to the field of integrated circuit design, and provides a multi-threaded storage unit. The multi-threaded storage unit comprises: a first memory used for storing, in a linked list, instructions corresponding to different threads; a controller connected to the first memory and used for receiving an instruction to be stored and storing the instruction to be stored in the linked list of the first memory; and a linked list state table module connected to the first memory and used for generating, in response to the storage of the instruction to be stored in the linked list of the first memory, a storage record of the instruction to be stored in the first memory. The multi-threaded storage unit can reduce the chip area occupied by instruction temporary storage circuits of different threads.

## Description

### TECHNICAL FIELD

The present disclosure relates to the field of integrated circuits, and specifically to a multi-threaded storage method, a unit, a chip, and an electronic device.

### BACKGROUND ART

In some devices that work with multiple threads, such as shaders, when executing instructions of different threads, it is necessary to output the instructions of different threads to the corresponding execution units of different threads. Therefore, the instructions of different threads are outputted separately using different queues.

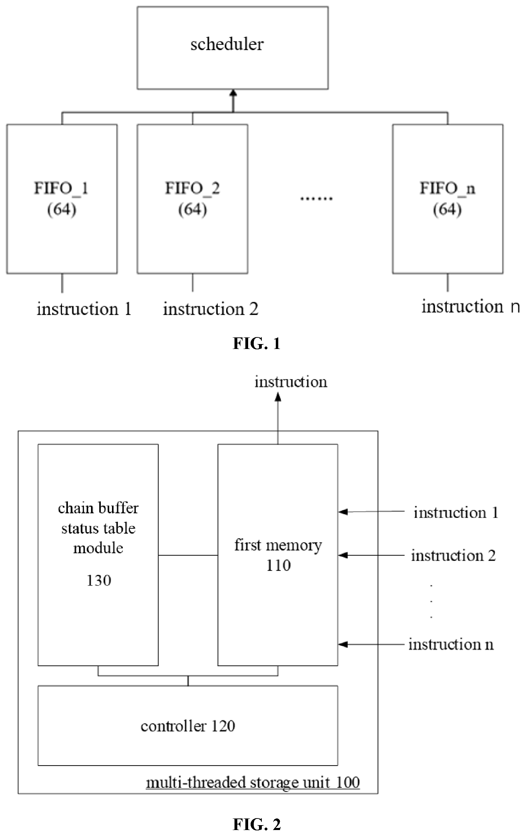

As shown in FIG. 1, currently, multiple FIFOs (First In First Out, a memory struct) are arranged to temporarily store instructions of different threads corresponding to queues. That is, multiple instructions of each thread are grouped into one queue, and multiple instructions of one queue can be stored in one FIFO. Then, a scheduler is used to control the output of instructions in each FIFO. However, since the number of instructions required to be stored for each thread varies, and the number of instructions for the same thread also varies at different times, the method requires each FIFO to be able to store a sufficient number of instructions. For example, in FIG. 1, each FIFO needs to be able to store 64 instructions. The method makes each FIFO occupy a large chip area. Additionally, in practical use, the number of instructions outputted to each execution unit can be unbalanced. For example, some FIFOs store more than 30 instructions or even exceed 64 instructions, while other FIFOs may store less than 10 instructions. This makes it impossible to fully utilize the storage space of each FIFO. If a larger FIFO is arranged, there will be the problem of causing a larger waste of chip area.

### SUMMARY

In view of this, the present disclosure aims to provide a multi-threaded storage method, a unit, a chip, and an electronic device, which reduce the chip area occupied by the circuit when storing instructions for different threads temporarily, and reduce the waste of chip area.

In a first aspect, the embodiments of the present disclosure provide a multi-threaded storage unit comprising a first memory, configured for storing instructions corresponding to different threads as a data field of a chain table; a controller connected to the first memory, wherein the controller is configured for receiving a to-be-stored instruction and storing the to-be-stored instruction into the first memory; and a chain buffer status table module, connected to the first memory and configured for generating a storage record of the to-be-stored instruction in the first memory in response to the storage of the to-be-stored instruction in the first memory. The storage record comprises an address of the to-be-stored instruction in the first memory, and the address is configured for representing a pointer field of the nodes in the chain table.

In embodiments of the present disclosure, the use of the first memory can allow for the temporary storage of instructions for different threads and the setting of a chain buffer status table module to generate a storage record of instructions in the first memory. Thus, if an instruction is considered as a node of a chain table, the first memory corresponds to storing the data field of the nodes of the chain table, and the chain buffer status table module corresponds to storing the pointer field of the nodes of the chain table. As a result, with the first memory and the chain buffer status table module, when the instructions corresponding to each thread are stored and read out, the instructions can be stored and read out correctly in the multi-threaded storage unit by the approach of using the chain table. Compared to the approach of multiple threads separately arranging memories capable of storing enough instructions, the first memory stores the instructions of different threads in a mixed manner, which can reduce the chip area occupied by memory corresponding to each thread or eliminate the need for arranging multiple memories. Therefore, it reduces the chip area occupied by the circuit for storing instructions of different threads. Additionally, by combining the use of the first memory with multiple smaller capacity memories, the total capacity of the memory decreases when storing the same number of instructions. This leads to an increase in the utilization rate of the capacity. Therefore, it can reduce the waste of chip area caused by underutilization of the memory.

In one embodiment, the multi-threaded storage unit further includes multiple second memories, wherein each of the second memories is connected to the first memory and connected to the chain buffer status table module. The second memory is configured to temporarily store instructions and output them. The number of the second memory matches the number of a maximum parallelism of the thread, and a different second memory is configured to temporarily store instructions corresponding to different threads. The controller is specifically configured to determine whether the second memory of the thread corresponding to the to-be-stored instruction is idle. The controller is configured to store the to-be-stored instruction in the first memory if the second memory is not idle. The controller is further configured to store the to-be-stored instruction in the first memory if the second memory of the thread corresponding to the to-be-stored instruction is idle. The controller is further configured to output the instruction of the thread in the first memory, corresponding to the second memory, to the second memory if any one of the second memories is idle.

In embodiments of the present disclosure, for each thread, a second memory can also be provided in addition to the first memory. On one hand, when the second memory corresponding to a thread is idle, instructions are directly outputted to the second memory, which allows instructions to be outputted directly from the second memory. Therefore, there is no need to store instructions through the first memory, and the chain buffer status table module does not need to generate a storage record, thus simplifying the control. On the other hand, instructions can be stored in the first memory when the second memory is not idle, which allows the capacity of the second memory to be set smaller and reduces the chip area occupied by the second memory. In addition, when the second memory is idle, if an instruction of a corresponding thread is stored in the first memory, the instruction is output to the second memory so that instructions of different threads can be output normally.

In one embodiment, the chain buffer status table module includes a status table submodule. The status table submodule comprises a state vector register, wherein the state vector register is configured to record an idle state of each storage row in the first memory. Each storage row of the first memory is configured to store the data field of different nodes in the chain table. The controller is also configured to respond to the reception of the to-be-stored instruction by determining, based on the state vector register, an idle storage row in the first memory. The controller is further configured to store the to-be-stored instruction in the idle storage row. The state vector register is further configured to respond to a storage of the to-be-stored instruction in the idle storage row and update the record for the idle storage row to a non-idle state.

In the embodiment of the present disclosure, the state vector register is utilized to record the idle state of each storage row in the first memory. Therefore, when storing instructions, it is possible to determine the idle storage rows and store instructions in the idle storage rows. Furthermore, after writing instructions into an idle storage row, it is updated to a non-idle state, so that no more instructions are stored in it until the instruction is output. This effectively reduces the possibility of instruction storage errors or loss, thus enhancing the accuracy of the multi-threaded storage unit in storing and outputting instructions of multiple threads.

In one embodiment, the chain buffer status table module also comprises a pointers table submodule. The pointers table submodule comprises multiple write address registers, wherein different write address register corresponds to a different thread. A write pointer recorded by the write address register is the address of the last inserted node in the first memory. The status table submodule also comprises a node address register, wherein the node address register is configured to record the addresses of nodes inserted into the chain table in the first memory. The controller is further configured for determining the write address register of the corresponding thread of the to-be-stored instruction from the pointers table submodule; determining the address of the last inserted node in the node address register based on the write address register of the corresponding thread; and updating the address of the idle storage row in the first memory at the address of the last inserted node in the node address register. Additionally, the controller is further configured for updating the pointer field of the last inserted node recorded in the write address register of the corresponding thread of the instruction to the address of the idle storage row in the first memory.

In the embodiments of the present disclosure, the node address register is used to record the address of the to-be-stored instruction in the first memory, i.e., the pointer field storing the instruction. Therefore, by using the node address register, it is possible to query the instructions in the first memory and obtain the required instructions. For each thread, by setting the write pointer of the corresponding write address register to the address of the last inserted node, a corresponding address is queried in the node address register based on the write pointer of the write address register, and the address of the to-be-stored instruction is updated at the address. It is enabled that the node address register can store instructions in a manner of a chain buffer and access addresses in a manner of a chain buffer, thus achieving, in conjunction with the data field stored in the first memory, a functionality similar to a chain table structure. The pointer field of the last inserted node recorded in the write address register is then updated to the address of the idle storage row in the first register. It is convenient for subsequent instructions to be written and then converted in a manner of a chain buffer for recording. The write address register and the node address register can enable the multi-threaded storage unit to accurately store instructions of different threads in a manner of a chain buffer.

In one embodiment, the multi-threaded storage unit further comprises a scheduler connected to the first memory and the chain buffer status table module. The scheduler is configured for scheduling the output of instructions from the second memory. The pointers table submodule also includes multiple read address registers, wherein each read address register corresponds to a different thread. The read pointer recorded by the read address registers is the pointer field of the nodes outputted from the first memory. The controller is also configured for responding to the output of instructions from the second memory and determining whether the first memory stores instructions of the thread corresponding to the second memory. The controller is also configured for obtaining, in a case where the first memory stores the instructions of the thread corresponding to the second memory, a read pointer from the read address register of the thread corresponding to the instruction; outputting, based on the read pointer, the instructions of the thread corresponding to the second memory from the first memory to the second memory; and updating the read pointer to the address of the next node of the outputted instruction in the first memory.

In the embodiments of the present disclosure, for structures that include multiple second memories, a scheduler can be used to control the output of the respective stored instructions from each of the second memories. After the instructions in the first memory are output to the second memory, they are recorded using the read address register, so that the output of the instructions can be accurately recorded by the read address register. Each instruction is enabled to be accurately output based on the recording.

In one embodiment, the state vector register is further configured for updating the storage row where the instruction of the thread corresponding to the second memory is located to an idle storage row in response to the output of the instructions of the thread corresponding to the second memory from the first memory.

In the embodiments of the present disclosure, after the instructions are outputted from the first memory, the record in the state vector register is updated to an idle storage row, thereby enabling the first memory to be inputted with new instructions. The update can enable the first memory to cyclically store different instructions, thereby eliminating the need to set the first memory capacity to be particularly large and reducing the possibility of the first memory occupying too large area.

In one embodiment, the to-be-stored instruction is inserted into a predetermined position in the chain buffer in the form of a node of the chain table. The chain buffer status table module is specifically configured for obtaining a first address of the to-be-stored instruction in the first memory and a second address of a node following the predetermined position; updating a pointer field of a node preceding the predetermined position to the first address; and updating a pointer field of the node corresponding to the predetermined position to the second address.

When the instructions are stored in a manner of a chain buffer, during the insertion of a to-be-stored instruction into the chain buffer, the pointer field of the node preceding the inserted predetermined position can be modified to the address corresponding to the to-be-stored instruction, and the pointer field of the node of the to-be-stored instruction can be modified to the second address of the node following the predetermined position, thereby realizing the insertion of the to-be-stored instruction. The structure of the chain table supports the insertion or removal of nodes at arbitrary positions. In the embodiments of the present disclosure, the instructions are stored in a manner of a chain buffer, which can enable the instructions of different threads to be mixed and stored in the same first memory, and distinguish the instructions corresponding to different threads by the addresses recorded in the chain buffer status table module. Thus, for multiple threads, there is no need to separately arrange larger memories to store the instructions of each thread, thus reducing the chip area occupied by the memories.

In a second aspect, the embodiments of the present disclosure provide a chip comprising: the multi-threaded storage unit as described in any one of the embodiments in the first aspect.

In a third aspect, the embodiments of the present disclosure provide an electronic device, comprising the chip as described in the second aspect.

In a fourth aspect, the embodiments of the present disclosure provide a multi-threaded storage method applied to a multi-threaded storage unit. The multi-threaded storage method comprises receiving a to-be-stored instruction; storing the to-be-stored instruction in a chain buffer of a first memory, wherein the first memory is configured for storing instructions corresponding to different threads as a data field of a chain buffer; and generating a storage record of the to-be-stored instruction in the first memory in response to the storage of the to-be-stored instruction in the first memory, wherein the storage record comprises an address of the to-be-stored instruction in the first memory, and the address is configured for representing a pointer field of the nodes in the chain table.

Compared to the approach of multiple threads separately arranging memories capable of storing enough instructions, in embodiments provided in the present disclosure, the multi-threaded storage unit can store instructions of different threads in a form similar to a chain table. The first memory stores the instructions of different threads in a mixed manner, which can reduce the chip area occupied by memory corresponding to each thread or eliminate the need for arranging multiple memories. Therefore, it reduces the chip area occupied by the circuit for storing instructions of different threads. Additionally, by combining the use of the first memory with multiple smaller capacity memories, the total capacity of the memory decreases when storing the same number of instructions. This leads to an increase in the utilization rate of the capacity. Therefore, it can reduce the waste of chip area caused by underutilization of the memory.

### BRIEF DESCRIPTION OF DRAWINGS

In order to more clearly illustrate the technical solutions of the embodiments of the present disclosure, the following will briefly introduce the drawings used in the embodiments. It should be understood that the following drawings only show some embodiments of the present disclosure, and therefore it should not be regarded as a limitation on the scope. Those ordinary skilled in the art can also obtain other related drawings based on these drawings without inventive effort.
FIG. 1 is a schematic diagram of an existing multi-threaded storage unit;
FIG. 2 is a schematic diagram of a multi-threaded storage unit provided in one embodiment of the present disclosure;
FIG. 3 is a structural schematic diagram of a chain table provided in one embodiment of the present disclosure;
FIG. 4 is an expanded schematic diagram of the multi-threaded storage unit provided in one embodiment of the present disclosure; and
FIG. 5 is a flowchart of a multi-threaded storage method provided in one embodiment of the present disclosure.

Reference numerals: multi-threaded storage unit 100; first memory 110; controller 120; judgment circuit 121; chain buffer status table module 130; status table submodule 131; state vector register 1311; node address register 1312; pointers table submodule 132; write address register 1321; read address register 1322; second memory 140; scheduler 150.

### DETAILED DESCRIPTION OF EMBODIMENTS

In order to make the objective, technical solutions, and advantages of the embodiments of the present disclosure clearer and more understandable, the present disclosure is described in further detail hereinafter in conjunction with the accompanying drawings and embodiments. It should be understood that the specific embodiments described herein are for the sole purpose of explaining the present disclosure and are not intended to limit the present disclosure.

Referring to FIG. 2, FIG. 2 is a schematic diagram of a multi-threaded storage unit provided in one embodiment of the present disclosure. The multi-threaded storage unit 100 includes: a first memory 110, a controller 120, and a chain buffer status table module 130.

The first memory 110 is configured for storing instructions corresponding to different threads in a chain table.

In the embodiment, the first memory 110 can be realized as various types of memories, for example, RAM (random access memory), DRAM (dynamic random access memory), PSRAM (pseudo static random access memory), and the like, without limitation herein. Each storage row in which the first memory 110 stores data needs to be capable of storing at least one instruction, that is, the width of the first memory 110 is greater than or equal to the size of the instruction to be stored. For example, if an instruction is 8-bit, the width of the first memory 110 is at least 8-bit. The depth of the first memory 110 can be configured according to practical situations, such as the number of threads, the efficiency of instruction generation and processing, etc. Exemplarily, in some embodiments, the depth of the first memory 110 can be 64. That is, the first memory 110 has 64 storage rows, and each storage row can store one instruction so that the first memory 110 can store 64 instructions. The foregoing is merely exemplary and should not be construed as a limitation of the present disclosure. For ease of understanding, in embodiments of the present disclosure, when each memory stores instructions, each storage row of the memory stores one memory instruction.

In the embodiment, the first memory 110 is configured for storing instructions, which, for instructions that do not use threads, all can be stored in the first memory 110.

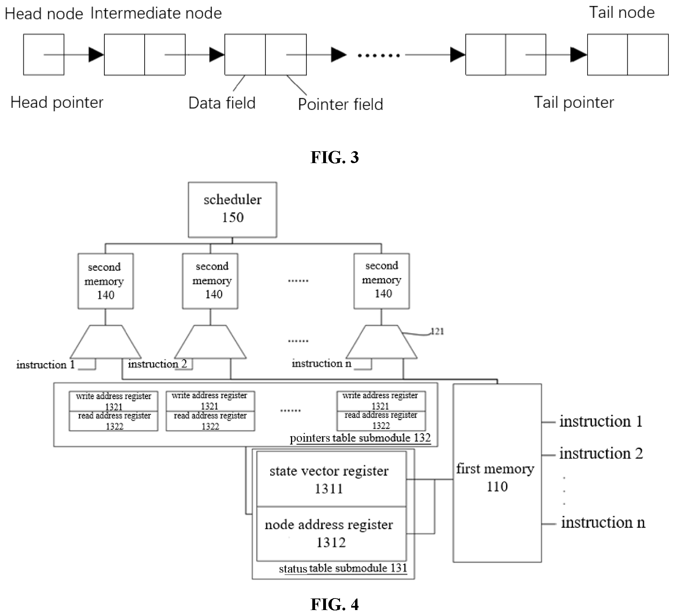

A chain table is a data structure commonly used in computer programming. Referring to FIG. 3, FIG. 3 is a structural schematic diagram of a chain table provided in one embodiment of the present disclosure. A chain table comprises multiple nodes, wherein a first node of the chain table is a head node and a last node of the chain table is a tail node. The nodes between the head node and the tail node are intermediate nodes. Each node comprises a data field and a pointer field, except for the head node. The data field is configured to store the data and the pointer field of the node is configured to store an address of a next node connected to the node. The data field of the head node is null, or considered to have no data field, and the pointer field of the tail node is null.

In the embodiments of the present disclosure, the first memory 110 stores instructions corresponding to different threads, wherein the first memory 110 is specifically configured to store instructions corresponding to different threads so that the instructions form a data field of a chain table.

The controller 120 is connected to the first memory 110. The controller 120 is configured for receiving a to-be-stored instruction and storing the to-be-stored instruction into the chain table of the first memory 110.

In the embodiment, the controller 120 includes various functional circuits, such as judgment circuits, circuits for controlling level changes, and the like, and does not refer specifically to a particular device. The various functional circuits of the controller 120 can be connected to the first memory 110, the chain buffer status table module 130, and the like, which are subsequently described in connection with other structures of the multi-threaded storage unit 100. The specific structure of the controller 120 will not be expanded upon here. In some embodiments, the controller 120 can also be implemented as a device capable of configuring a program, wherein the program of the device is configured to implement the functions of various types of functional circuits.

The chain buffer status table module 130 is connected to the first memory 110 and configured for generating a storage record of the to-be-stored instruction in the first memory 110 in response to the storage of the to-be-stored instruction in the chain table of the first memory 110.

In the embodiment, the chain buffer status table module 130 can be implemented as various types of modules capable of recording data. For example, the chain buffer status table module 130 can be implemented as a combination of one or more registers, or the chain buffer status table module 130 can be implemented as various types of memories and the like.

In the embodiment, the storage record can include the address of the to-be-stored instruction in the first memory 110, the storage order of the corresponding instruction of each thread, and the like. In addition, the utilization of the first memory 110 can also be included, such as whether or not the instruction is stored in each storage row, and the like.

There are various methods of inserting nodes in a chain table, for example, a head insertion method, a middle insertion method, and a tail insertion method. Taking the tail insertion method as an example, the process includes: obtaining the address of the newly inserted node, writing the address of the newly inserted node into the pointer field of the original tail node, and making the newly inserted node become the new tail node. Similarly, the head insertion method is to write the data field of the newly inserted node to the original head node and update the address of the newly inserted node to the pointer field of the new head node. The middle insertion method is to insert a newly inserted node into a predetermined position, update the pointer field of the node preceding the predetermined position to the address of the newly inserted node, and update the pointer field of the newly inserted node to the address of the node following the predetermined position.

In the embodiments of the present disclosure, after the to-be-stored instruction is stored in the first memory 110, a storage record of the to-be-stored instruction is generated by the chain buffer status table module 130.

In the embodiment, the storage record can be recorded, in a manner of the chain buffer, for the instructions of different threads, respectively. That is, for an instruction stored first, it is possible to record the address of the instruction in the first memory 110 and the address of a next instruction of the instruction. For the most recently stored instruction, the address of the instruction in the first memory 110 can be written into the location of the previous instruction, thus allowing the location of the previous instruction to simultaneously record its own address and the address of the most recently stored instruction. The location to store the address of the next instruction for the most recently stored instruction is null, waiting for a new instruction to be stored. If the most recently stored instruction is the first instruction to be stored, the address of the instruction in the first memory 110 can be recorded at an idle location. As a result, the addresses recorded in the chain buffer status table module 130 can be considered as pointer fields for the nodes in the chain table, which together with the data fields stored in the first memory 110 realizes the function of the chain buffer.

That is, in the embodiments of the present disclosure, the to-be-stored instruction can be inserted into a predetermined position of a chain buffer in the form of a node of the chain table. The predetermined position is configured to record the node corresponding to the to-be-stored instruction, and the predetermined position can be in front of the head node of the chain table, or after the tail node, or at any intermediate position of the chain table.

Accordingly, in some embodiments of the present disclosure, the updating of the storage record can be: obtaining a first address of the to-be-stored instruction in the first memory 110 and a second address of a node following the predetermined position; updating a pointer field of a node preceding the predetermined position to the first address; and updating a pointer field of the node corresponding to the predetermined position to the second address.

The position of the node inserted into the chain table is predefined and decided according to the selected insertion method, such as head insertion, tail insertion, middle insertion, etc. The details can be referred in the previous text and will not be further elaborated here. If the head insertion method is used, the pointer field of the node preceding the predetermined position is able to not be updated each time the instruction is stored. Accordingly, if the tail insertion method is used, the pointer field of the node corresponding to the predetermined position is able to not be updated each time the instruction is stored.

In the embodiment, the storage of the instruction can be analogous to a node of a chain table, with the data field of the node stored in the first memory 110, and the pointer field stored in the chain buffer status table module 130, wherein the pointer field is the address of the instruction in the first memory 110, i.e., the first address. When inserting a node into a predetermined position, it is necessary to modify the pointer field of the adjacent nodes to the node.

For example, the contents recorded in each row of the storage record are the pointer field of the current node and the pointer field of the next node. When using the tail insertion method, the instruction can be stored in the first memory 110 and the first address is obtained, the pointer field of the next node of the original tail node in the chain buffer status table module 130 is updated to the first address, and a new row is added to record the address of the to-be-stored instruction in the first memory node as the pointer field of the current node of the new tail node.

Since the tail insertion method is to insert a new node after the tail node, which does not have a next node, the pointer field of the next node of the new tail node does not need to be updated. As another example, when performing an intermediate insertion, the process can be similar to the tail insertion method, with the difference that the address of the node following the original predetermined position needs to be written at the pointer field of the next node of the new tail node.

The principle of using the head insertion method is similar, for example, when using the head insertion method, the instructions are stored in the data field of the original head node. Correspondingly, the instructions are written to the address corresponding to the pointer field of the original head node in the storage record of the chain buffer status table module 130. Moreover, a new node is added, wherein its pointer field records the address of the idle storage row of the new first memory 110 so that the added node becomes the new head node.

The above is just an example. The specific process can be adjusted and chosen reasonably according to actual requirements. Further details will not be elaborated here.

In addition, there can be various types of chain tables, and the multi-threaded storage unit 100 of the present disclosure can store instructions of different threads based on a circular chain table or a bidirectional chain table. Compared to ordinary unidirectional chain tables, bidirectional chain tables and circular chain tables can improve the utilization of the first memory 110 and the chain buffer status table module 130, thereby reducing the requirements for the first memory 110 and the chain buffer status table module 130, and further reducing the area occupied by the chip of the multi-threaded storage unit 100.

Correspondingly, when output is performed in the multi-threaded storage unit 100, the controller 120 can be connected to the chain buffer status table module 130, and the controller 120 obtains, from the chain buffer status table module 130, the pointer field of the instruction to be outputted, and obtains the instruction from the first memory 110 based on the address recorded in the pointer field. After the instruction is outputted, the pointer field of the node to which the instruction is connected in the chain buffer status table is changed accordingly. The outputting process is the opposite of the writing process. Specific details can be referenced from the existing process of removing nodes in a chain table. Further elaboration will not be provided here.

In the multi-threaded storage unit 100 provided in the embodiments of the present disclosure, the function of a chain table can be realized by the first memory 110 and the chain buffer status table module 130. When storing instructions, there is no need to categorize and store the instructions of each thread, in other words, they can be stored arbitrarily in the first memory 110. The recording of the order of the nodes in the chain table is achieved by the addresses recorded by the chain buffer status table module 130. As a result, there is no need to provide separate FIFOs for each thread to store their respective corresponding instructions, or smaller FIFOs can be provided to store the instructions for each thread. For example, whereas originally each FIFO needs to be able to store 64 instructions, meaning that 64 storage rows are required, with the first memory 110 and the chain buffer status table module 130, only 3 instructions can be stored per FIFO. It is achieved that the chip area occupied by the first memory 110 and the chain buffer status table module 130 is much smaller than the chip area occupied by multiple large-capacity FIFOs. When no FIFOs or only a plurality of small-capacity FIFOs are provided, the occupied chip area can be effectively reduced.

In addition, in actual use, there will be an imbalance in the use of the FIFOs. For example, in multiple FIFOs that are originally able to store 64 instructions each, it is possible that one FIFO stores twenty instructions, another FIFO stores five using instructions, and yet another FIFO stores only two instructions. The utilization rate of FIFOs storing 5 or 2 instructions is obviously low, which is wasteful. However, in actual use, there are cases where different FIFOs may store more instructions, and it is not possible to set the size of each FIFO according to the thread. However, in the multi-threaded storage unit 100 provided in the present disclosure, a smaller capacity FIFO is provided. For example, by providing FIFOs capable of storing three instructions, the utilization rate can be increased for each FIFO. For example, the original FIFO that can store 64 instructions has a utilization rate of 2/64 or 3/64, and after replacing it with a FIFO with a capacity of 3, the utilization rate becomes 2/3 or 1, which effectively improves the utilization rate and reduces the waste of chip area. When the FIFO is unable to store the instructions, the instructions are stored in the first memory 110 to avoid the loss of the instructions.

Accordingly, in some embodiments of the present disclosure, the multi-threaded storage unit 100 can further comprise multiple second memories 140.

Referring to FIG. 4, FIG. 4 is an expanded schematic diagram of the multi-threaded storage unit 100 provided in one embodiment of the present disclosure. In the embodiment, multiple second memories 140 can be provided, and the second memories 140 can be FIFOs or other memories. The number of the second memory 140 matches the number of a maximum parallelism of the thread, and the different second memories 140 are configured to temporarily store instructions corresponding to different threads. In other words, each second memory 140 corresponds to one thread and stores instructions of the thread.

In the embodiment, the controller 120 can further comprise a judgment circuit 121, wherein the judgment circuit 121 can comprise a multiplexer. An output end of the judgment circuit 121 is connected to the second memory 140. Different input ends are connected to the output ends of the to-be-stored instruction and the first memory 110, respectively, wherein the output end of the to-be-stored instruction is also connected to the first memory 110. The judgment circuit 121 is configured to control the gating between the output ends and the different input ends based on whether the second memory is idle or not. The judgment circuit 121 is specifically configured to determine whether the second memory 140 of the thread corresponding to the to-be-stored instruction is idle. If the second memory 140 is idle, the output end of the to-be-stored instruction is controlled to conduct with the second memory 140, thereby controlling the to-be-stored instruction to be directly stored in the second memory 140. Conversely, if the second memory 140 is not idle, the judgment circuit 121 controls the conducting between the first memory 110 and the second memory 140, and the output end of the to-be-stored instruction is disconnected from the second memory 140. Therefore, when there is no idle space in the second memory 140, the to-be-stored instruction is enabled to be stored into the first memory 110 first, and then the to-be-stored instruction is controlled to output to the second memory 140 through the first memory 110. In addition, the controller 120 can include a device capable of configuring a program, wherein the program of the device is configured to implement the functions of the aforementioned judgment circuit.

In the embodiment, the controller 120 can further include a monitoring circuit (not shown in the figures) connected to the output end of each second memory 140. When it is detected that any of the second memories 140 outputs instructions, which means that any of the second memories 140 is idle, the instructions of the thread, in the first memory 110 and corresponding to the second memory 140, are output to the second memory 140. In addition, the controller 120 can include a device capable of configuring a program, wherein the program of the device is configured to implement the functions of the aforementioned monitoring circuit.

In the above embodiment, the first memory 110 and the second memory 140 are used in combination, and the instructions are stored by the second memory 140 when the second memory 140 is idle. Thus, the instructions do not need to be stored in the first memory 110, thus simplifying the output process of the instructions, and reducing the time and power consumption required for temporary storage and output of the instructions. In addition, when the second memories 140 are not idle, the instructions are stored by the first memory 110. The second memories 140 do not need to be designed with large capacities, thereby preventing the second memory 140 from occupying too much chip area.

Referring to FIG. 4, in an embodiment of the present disclosure, the chain buffer status table module 130 can include a pointers table submodule 132 and a stutus table submodule 131.

The pointers table submodule 132 is mainly configured to record the address of a previous inserted node of each thread and the address of a previous read-out instruction, wherein the address is the address in the first memory 110 of the instruction. In the pointers table submodule 132, each address is recorded as a pointer, i.e., the pointer field corresponding to each instruction. Thus, the pointer fields recorded in the pointers table submodule 132 and the data fields recorded in the first memory 110 can enable the instructions to be stored and outputted in the form of a chain table.

The status table submodule 131 is mainly configured to record the usage of the first memory 110 and the address of each instruction corresponding to the first memory 110. For example, it is recorded whether or not each storage row in the first memory 110 is used, and the address of each instruction in the first memory 110 is recorded as a combination of the pointer field of the corresponding node and the pointer field of the next node.

In one embodiment, the status table submodule 131 can include a state vector register 1311. A state vector register 1311 is configured to record the idle state of each storage row in the first memory 110.

In the embodiment, each storage row of the first memory 110 is configured to store the data fields of different nodes in the chain buffer, respectively, which can then be recorded using the state vector register 1311. For example, if the first memory 110 has 64 rows, the state vector register 1311 can have 64 data bits, wherein each of the data bits corresponds to a storage row of the first memory 110. If no instruction is stored in the memory, the corresponding data bit is of 0; conversely, if an instruction is stored in the storage row, the corresponding data bit is of 1.

Accordingly, the controller 120, in turn, can determine an idle storage row of the first memory 110 based on the state vector register 1311 in response to the reception of the to-be-stored instruction. Accordingly, when an instruction is controlled to be stored in the first memory 110, the to-be-stored instruction can be stored in an idle storage row.

In addition, the state vector register 1311 can also respond to a storage of the to-be-stored instruction in the idle storage row and update the record for the idle storage row to a non-idle state. For example, the data bit corresponding to the storage row is changed from 0 to 1.

Conversely, the state vector register 1311 can further update the storage row, where the instruction of the thread corresponds to the second memory 140, to an idle storage row, in response to the output of the instructions of the thread corresponding to the second memory 140 from the first memory 110. For example, the data bit corresponding to the storage row is changed from 1 to 0.

Through the state vector register 1311, the utilization of the first memory 110 can be accurately obtained. Consequently, the to-be-stored instructions can be stored in the idle storage rows, thus reducing the occurrence of abnormalities such as instruction loss and improving the accuracy of the storing and outputting of multi-threaded instructions.

Accordingly, the status table submodule 131 can also include a node address register 1312. The node address register 1312 is configured to record the address of each node inserted into the chain buffer in the first memory 110.

In the embodiment, the node address register 1312 can store the address of each node as a pointer field of a node, and a pointer field of a next node. In this manner, it is facilitated to search for the addresses of the nodes. For example, based on the address of one node, the pointer field of the next node can be queried. Additionally, by making the pointer field of each node point to the next node in sequence, a structure similar to a chain table is formed, so that it is possible to carry out the storage and output of the instructions in the form of a chain table. A node corresponds to an instruction. The node includes a data field and a pointer field, wherein the data field refers to the data of the instruction itself, and the pointer field refers to the address of the instruction in the first memory 110. This will not be explained later.

In an embodiment, the pointers table submodule 132 includes multiple write address registers 1321 and multiple read address registers 1322. Different write address registers 1321 correspond to different threads, and different read address registers 1322 correspond to different threads. A write pointer recorded by the write address register 1321 is the address of the last inserted node in the first memory 110. The read pointer recorded in the write address register 1321 is the address of the last read-out node in the first memory 110.

In the embodiment, a thread corresponds to a write address register and a read address register 1322. The addresses of the instructions of the different threads are recorded in different write address registers 1321 and read address registers 1322, respectively.

In the embodiment, the controller 120 is further configured for determining the write address register 1321 of the corresponding thread of the to-be-stored instruction from the pointers table submodule 132; determining the address of the last inserted node in the node address register 1312 based on the write address register 1321 of the corresponding thread; and updating the address of the idle storage row in the first memory at the address of the last inserted node in the node address register 1312.

After the instructions are written to the first memory 110, the corresponding records need to be updated so that the instructions corresponding to each thread can be differentiated, thus ensuring accurate storage and output. In addition, it is also necessary to store the instructions in a manner similar to a chain table, which requires updating the pointer field of the node corresponding to the previous instruction.

Thus, after writing the instruction, the controller 120 can determine the thread corresponding to the instruction, and then determine the corresponding write address register 1321 based on the thread. The write address register 1321 records the address of the last inserted node, i.e., the pointer field of the last inserted node. As an example of the tail insertion method, the write address register 1321 records the address of the tail node. If a new node is inserted, the pointer field of the original tail node is updated to the address of the newly inserted node. Then, the pointer field of the original tail node (i.e., the write pointer) can be determined by the write address register 1321, and the original end node is found in node address register 1312 based on the write pointer. The pointer field of the original tail node is updated to the address of the newly inserted node, and a new row is rebuilt to record the address of the newly inserted node. This allows the newly inserted node to become the new tail node.

At the same time, the write pointer of the original tail node recorded in the write address register 1321 is updated to record the address of the newly inserted node. That is, the pointer field of the last inserted node recorded in the write address register 1321 of the corresponding thread of the instruction is updated to the address of the idle storage row of the inserted node recorded in the first memory. Therefore, when the next time a node is inserted, the node can be looked up based on the write pointer of the write address register 1321.

The above describes the process of writing instructions, and accordingly, the multi-threaded memory also supports the reading of data. In some embodiments of the present disclosure, a scheduler 150 can be provided, wherein the scheduler 150 is connected to each second memory 140 to schedule the output of instructions in each second memory 140.

In the embodiments of the present disclosure, the scheduler 150 can be connected to the controller 120, the first memory 110, and the chain buffer status table module 130. After an instruction in any of the second memories 140 is outputted, a signal is sent to the controller 120 to notify the controller 120, the first memory 110, and the chain buffer status table module 130, so as to allow the controller 120, the first memory 110, and the chain buffer status table module 130 to cooperate for the output of the instruction. If the multi-threaded storage unit 100 does not include the scheduler 150 and the second memory unit, it can be that a monitoring circuit is involved in the controller 120 to control the output of the instructions in the first memory 110 based on the monitoring signals from the monitoring circuit.

In the embodiment, the process of reading instructions out of the first memory 110 can include: the controller 120, in response to the output of instructions in the second memory 140, determining whether the first memory 110 stores the instructions of the thread corresponding to the second memory 140; and if not, determining that there are no new instructions of the thread and waiting for new instructions. In a case where the first memory 110 stores the instructions of the thread corresponding to the second memory 140, the controller 120 is also configured for obtaining a read pointer from the read address register 1322 of the thread corresponding to the instruction; outputting, based on the read pointer, the instructions of the thread corresponding to the second memory 140 from the first memory 110 to the second memory 140; and updating the read pointer to the address in the first memory 110 of the next node of the outputted instruction.

Similar to the writing process, the address of the instruction is determined from the node address register 1312 based on the read pointer in the read address register 1322. Then, the corresponding instruction in the first memory 110 is controlled to output based on the address. After outputting, the record in the node address register 1312 is modified, and the pointer field corresponding to the instruction is deleted. The pointer field originally pointing to the node is modified to the next pointer field pointed by the node. At the same time, the read pointer recorded in read address register 1322 is modified to the pointer field of the next node that will be read. Moreover, the state vector register 1311 is updated as mentioned in the previous embodiments.

Therefore, the output and writing of instructions are accurately recorded in a chain-table-like manner by the read address register 1322 and the write address register 1321, thereby enabling the multi-threaded storage unit 100 to control the storage and output of instructions on the principle of a chain table structure. Unlike the conventional approach of array arrangement of associating items, where this approach requires that the access to the data is often converted in a different order of arrangement, the chain buffer allows insertion and removal of nodes at any position on the table. The computer memory space can be fully utilized, thus eliminating the need to separately allocate larger capacities for different threads to store instructions. This reduces the occupancy of the chip area by the memory storing instructions, and reduces the occupancy of the chip area when the memory is not fully utilized.

It is important to distinguish that the present disclosure implements the principle of a chain buffer in a manner of hardware, with the first memory 110 storing data fields and the chain buffer status table module 130 storing pointer fields. This allows for the storage of instructions to be temporarily stored and outputted in a manner similar to a chain table, rather than storing the instructions as a chain table.

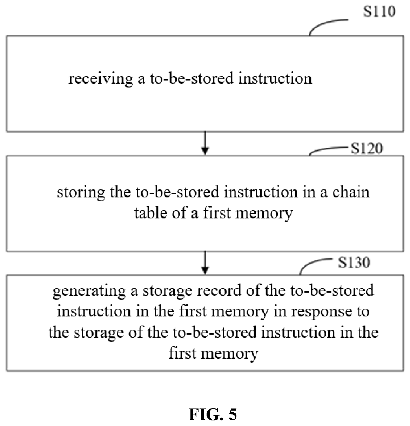

Based on the same inventive concept, the embodiments of the present disclosure also provide a multi-threaded storage method applied to the multi-threaded storage unit provided in any of the above embodiments. Referring to FIG. 5, FIG. 5 is a flowchart of a multi-threaded storage method provided in one embodiment of the present disclosure. The multi-threaded storage method includes the following steps.

S110: receiving a to-be-stored instruction.

In the embodiment, the to-be-stored instruction can be instructions corresponding to any thread.

S120: storing the to-be-stored instruction in a chain buffer of a first memory.

In the embodiment, the first memory 110 is configured for storing instructions corresponding to different threads as a data field of a chain buffer.

S130: generating a storage record of the to-be-stored instruction in the first memory in response to the storage of the to-be-stored instruction in the first memory.

In the embodiment, the storage record comprises an address of the to-be-stored instruction in the first memory 110, and the address is configured for representing a pointer field of the nodes in the chain buffer.

In an embodiment, the multi-threaded storage unit comprises multiple second memories 140, wherein each of the second memories 140 is connected to the first memory and connected to the chain buffer status table module 130. The second memory 140 is configured to temporarily store instructions and output them. The number of the second memories 140 matches the number of a maximum parallelism of the threads, and the different second memories 140 are configured to temporarily store instructions corresponding to different threads. The method further includes: determining whether the second memory 140 of the thread corresponding to the to-be-stored instruction is idle; storing the to-be-stored instruction in the first memory 110 if the second memory 140 is not idle; storing the to-be-stored instruction in the second memory 140 if the second memory 140 of the thread corresponding to the to-be-stored instruction is idle; and outputting the instruction of the thread in the first memory 110, corresponding to the second memory 140, to the second memory 140 if any one of the second memories 140 is idle.

In one embodiment, the chain buffer status table module 130 includes a status table submodule 131. The status table submodule 131 comprises a state vector register 1311, wherein the state vector register 1311 is configured to record an idle state of each storage row in the first memory 110. Each storage row of the first memory 110 is respectively configured to store the data field of different nodes in the chain buffer, and S110 comprises determining an idle storage row of the first memory 110 based on the state vector register 1311 in response to the reception of the to-be-stored instruction; storing the to-be-stored instruction in the idle storage row; and responding to a storage of the to-be-stored instruction in the idle storage row and updating the record for the idle storage row to a non-idle state.

In one embodiment, the chain buffer status table module 130 further includes a pointers table submodule 132. The pointers table submodule 132 comprises multiple write address registers 1321, wherein different write address registers 1321 correspond to different threads. A write pointer 1321 recorded by the write address register is the address of the last inserted node in the first memory 110. The state table submodule 131 also comprises a node address register 1312, wherein the node address register 1312 is configured to record the address of each node inserted into the chain buffer in the first memory 110. S130 includes: determining the write address register 1321 of the corresponding thread of the to-be-stored instruction from the pointers table submodule 132; determining the address of the last inserted node in the node address register 1312 based on the write address register 1321 of the corresponding thread; and updating the address of the idle storage row in the first memory at the address of the last inserted node in the node address register 1312; and updating the pointer field of the last inserted node recorded in the write address register 1321 of the corresponding thread of the instruction to the address of the idle storage row in the first memory.

In one embodiment, the multi-threaded storage unit further comprises a scheduler 150, wherein the scheduler 150 is connected to the first memory 110 and the chain buffer status table module 130. The scheduler 150 is configured for scheduling the output of instructions from the second memory 140. The pointers table submodule 132 also includes multiple read address registers 1322, wherein different read address register 1322 corresponds to a different thread. The read pointer recorded by the read address registers 1322 is the pointer field of a next node outputted from the first memory 110. After S130, the method further comprises: responding the output of instructions from the second memory 140 and determining whether the first memory 110 stores instructions of the thread corresponding to the second memory 140; obtaining, in a case where the first memory 110 stores the instructions of the thread corresponding to the second memory 140, a read pointer from the read address register 1322 of the thread corresponding to the instruction; outputting, based on the read pointer, the instructions of the thread corresponding to the second memory 140 from the first memory 110 to the second memory 140; and updating the read pointer to the address in the first memory 110 of the next node of the outputted instruction.

In one embodiment, the method further includes: updating the storage row, where the instruction of the thread corresponds to the second memory 140, to an idle storage row, in response to the output of the instructions of the thread corresponding to the second memory 140 from the first memory 110.

In one embodiment, S130 further includes: obtaining a first address of the node in the first memory 110 and a second address of a node following the predetermined position; updating a pointer field of a node preceding the predetermined position to the first address; and updating a pointer field of a predetermined node to the second address.

The multi-threaded storage method implements similar functionality to the multi-threaded storage unit and will not be repeated here.

Based on the same inventive concept, the embodiments of the present disclosure also provide a chip, wherein the chip comprises the multi-threaded storage unit provided in any of the embodiments above.

In the embodiment, the chip can be a chip that can perform multi-threaded work. For example, the chip can be a chip including a shader.

Based on the same inventive concept, the embodiments of the present disclosure also provide an electronic device, wherein the electronic device can comprise the chip provided in the embodiments above. The electronic device can be a device that includes a multi-threaded operating device.

The technical features of the above embodiments can be freely combined without conflict, and the embodiments obtained by the combination are covered within the scope of protection of the present disclosure.

The above are only specific embodiments of the present disclosure, but the scope of protection of the present disclosure is not limited thereto. Any person skilled in the art can easily envisage changes or substitutions within the technical scope disclosed in the present disclosure, which should be encompassed within the scope of protection of the present disclosure. Therefore, the scope of protection of the present disclosure shall be stated to be subject to the scope of protection of the claims.

Furthermore, the terms "comprise", "include", or any other variations are intended to encompass non-exclusive inclusion. This means that processes, methods, items, or devices that include a series of elements not only contain those elements explicitly listed but also contain other elements that are not explicitly mentioned or inherently part of such processes, methods, items, or devices. In the absence of further limitations, the inclusion of an element specified by the phrase "comprising a..." does not exclude the presence of additional identical elements in the process, method, article, or apparatus that includes the specified element.

## Claims

1. A multi-threaded storage unit, **characterized by** comprising:
a first memory, configured for storing instructions corresponding to different threads as a data field of a chain table;
a controller, connected to the first memory, wherein the controller is configured for receiving a to-be-stored instruction and storing the to-be-stored instruction into the first memory; and
a chain buffer status table module, connected to the first memory and configured for generating a storage record of the to-be-stored instruction in the first memory in response to a storage of the to-be-stored instruction in the first memory, wherein the storage record comprises an address of the to-be-stored instruction in the first memory,
and the address is configured for representing a pointer field of a node in the chain table.

2. The multi-threaded storage unit according to claim 1, further comprising:
multiple second memories, wherein each of the second memories is connected to the first memory and connected to the chain buffer status table module; the second memories are configured to temporarily store and then output instructions, wherein the number of the second memories match the number of a maximum parallelism of the threads, and different second memories are configured to temporarily store instructions corresponding to different threads;
the controller is configured for determining whether a second memory of a thread corresponding to the to-be-stored instruction is idle;
the controller is configured for storing the to-be-stored instruction in the first memory when the second memory is not idle;
the controller is further configured for storing the to-be-stored instruction in the second memory when the second memory of the thread corresponding to the to-be-stored instruction is idle; and
the controller is further configured for outputting the instruction of the thread in the first memory, corresponding to the second memory, to the second memory when any one of the second memories is idle.

3. The multi-threaded storage unit according to claim 2, wherein the chain buffer status table module comprises a status table submodule; the status table submodule comprises a state vector register, wherein the state vector register is configured for recording an idle state of each storage row in the first memory; and each storage row of the first memory is respectively configured to store data fields of different nodes in the chain table;
the controller is further configured for determining, based on the state vector register, an idle storage row in the first memory, in response to a reception of the to-be-stored instruction; and the controller is further configured for storing the to-be-stored instruction in the idle storage row; and
the state vector register is further configured for updating a record for the idle storage row to a non-idle state, in response to a storage of the to-be-stored instruction in the idle storage row.

4. The multi-threaded storage unit according to claim 3, wherein the chain buffer status table module further comprises a pointers table submodule; the pointers table submodule comprises multiple write address registers, wherein different write address registers correspond to different threads; a write pointer recorded by a write address register is an address of a last inserted node in the first memory;
the status table submodule further comprises a node address register, wherein the node address register is configured for recording an address of each node inserted into the chain table in the first memory;
the controller is further configured for determining a write address register of a corresponding thread of the to-be-stored instruction from the pointers table submodule; determining an address of the last inserted node in the node address register based on the write address register of the corresponding thread; and updating an address of the idle storage row in the first memory at the address of the last inserted node in the node address register; and
the controller is further configured for updating a pointer field of the last inserted node recorded in the write address register of the corresponding thread of the instruction to the address of the idle storage row in the first memory.

5. The multi-threaded storage unit according to claim 3, wherein the multi-threaded storage unit further comprises a scheduler, connected to the first memory and the chain buffer status table module, and the scheduler is configured for scheduling an output of an instruction from a second memory;
the pointers table submodule further comprises multiple read address registers, wherein different read address registers correspond to different threads; a read pointer recorded by the read address registers is a pointer field of a next node outputted from the first memory;
the controller is further configured for determining whether the first memory stores an instruction of a thread corresponding to the second memory, in response to the output of the instruction from the second memory; and
the controller is further configured for obtaining, in a case where the first memory stores the instruction of the thread corresponding to the second memory, a read pointer from the read address register of the thread corresponding to the instruction; outputting, based on the read pointer, the instruction of the thread corresponding to the second memory from the first memory to the second memory; and updating the read pointer to an address of a next node of the outputted instruction in the first memory.

6. The multi-threaded storage unit according to claim 3, wherein the state vector register is further configured for updating a storage row, where an instruction of a thread corresponds to the second memory, to an idle storage row, in response to an output of the instruction of the thread corresponding to the second memory from the first memory.

7. The multi-threaded storage unit according to any one of claims 1 to 6, wherein the to-be-stored instruction is inserted into a predetermined position in the chain buffer in a form of a node of the chain table; and the chain buffer status table module is configured for obtaining a first address of a corresponding node of the to-be-stored instruction in the first memory and a second address of a node following the predetermined position; updating a pointer field of a node preceding the predetermined position to the first address; and updating a pointer field of a node corresponding to the predetermined position to the second address.

8. A chip, comprising the multi-threaded storage unit according to any one of claims 1 to 7.

9. An electronic device, comprising the chip according to claim 8.

10. A multi-threaded storage method, applied to the multi-threaded storage unit according to any one of claims 1 to 7, wherein the multi-threaded storage method comprises:
receiving a to-be-stored instruction;
storing the to-be-stored instruction in a chain buffer of a first memory, wherein the first memory is configured for storing instructions corresponding to different threads as a data field of the chain table; and
generating a storage record of the to-be-stored instruction in the first memory in response to a storage of the to-be-stored instruction in the first memory, wherein the storage record comprises an address of the to-be-stored instruction in the first memory,
and the address is configured for representing a pointer field of a node in the chain table.
